# EUROPÄISCHE PATENTSCHRIFT

(11) **EP 3 464 435 B1**
(45) Veröffentlichungstag und Bekanntmachung des Hinweises auf die Patenterteilung: **18.11.2020**
(21) Anmeldenummer: 17726242.5
(22) Anmeldetag: 22.05.2017
(51) Int. Cl.: C08J 9/24, C08J 9/32

(54) **HOHLPARTIKEL AUS THERMOPLASTISCHEN ELASTOMEREN UND PORÖSE FORMKÖRPER**
HOLLOW PARTICLES MADE FROM THERMOPLASTIC ELASTOMERS AND POROUS MOULDED BODIES
PARTICULES CREUSES EN ÉLASTOMÈRE THERMOPLASTIQUE ET CORPS MOULÉS POREUX

(30) Priorität: 25.05.2016 EP 16171208
(43) Veröffentlichungstag der Anmeldung: 10.04.2019
(73) Patentinhaber: BASF SE, 67056 Ludwigshafen am Rhein (DE)
(72) Erfinder: PRISSOK, Frank, 49448 Lemfoerde (DE); AHLERS, Juergen, 67056 Ludwigshafen am Rhein (DE)
(74) Vertreter: BASF IP Association
(86) Internationale Anmeldenummer: PCT/EP2017/062298
(87) Internationale Veröffentlichungsnummer: WO 2017/202782

(56) Entgegenhaltungen:
- DE-A1-102006 046 868
- GB-A- 1 458 576

## Beschreibung

Die Erfindung betrifft die Verwendung von Hohlpartikel mit einer Hülle aus thermoplastischen Elastomeren und einer gasgefüllten Zelle zur Herstellung von porösen Formkörpern, Verfahren zur Herstellung von porösen Formkörpern durch thermisches Verbinden oder Verkleben der Hohlpartikel und die daraus erhältlichen porösen Formkörper.

Hochelastische, geschlossenzellige Schaumstoffe, wie Partikelschaumstoffe aus thermoplastischem Polyurethan sind beispielsweise in WO 2007/082838 beschrieben. Die durch Verschweißen von Schaumstoffpartikeln erhalten Formteile zeigen gute mechanische Eigenschaften und hohe Rückprallelastizitäten. Die Dicke der Außenhülle der Schaumstoffpartikel hat großen Einfluss auf die mechanischen Eigenschaften des Schaumstoffformteils. Zellwandstärken und das Verhältnis von Zellwandstärke zu Innenzellaufbau sind aufgrund der Herstellmethode nur wenig variierbar. Höhere Wandstärken sind somit gleichbedeutend mit höherem Raumgewicht.

Hybridsysteme aus geschäumten thermoplastischen Elastomeren (TPE) und Polyurethanen sind aus WO 2008/087078 bekannt. Sie sind erhältlich durch Verklebung bzw. Einschäumung von Schaumpartikel mittel PU-Bindermitteln oder PU-Systemschäumen.

Die DE 10 2006 046868 beschreibt die Herstellung eines Schaummaterials aus Polyvinylchlorid (PVC), wobei unter anderem Hohlkugeln mit einer Hülle aus thermoplastischem Polyurethan eingesetzt werden, die mit einer niedrigsiedenden Flüssigkeit gefüllt sind.

Die EP 0 697 274 B1 beschreibt offenzellige Expansionsformteile aus einem Polyolefinharz, welches durch Verschweißen von rohrförmigen, geschäumten Teilchen mit einem Durchgangsloch erhalten werden können.

Die WO 2007/022338 beschreibt einen Schuh mit einer Mittelsohle, welche ein Dämpfungselement in Form einer Flüssigkeit-gefüllten Tasche aus z. B. thermoplastischem Polyurethan aufweist.

Mit Flüssigkeiten oder Gas gefüllte Taschen (Airbags) als Dämpfungselemente haben jedoch den Nachteil, dass aufgrund der Größe der Kammern der Druck ungleichmäßig verteilt wird und im Falle einer Beschädigung einer Kammer das gesamte Dämpfungselement unbrauchbar wird.

Aufgabe der Erfindung war es daher, den genannten Nachteilen abzuhelfen und Hohlpartikel zu verwenden, die sich zu porösen Formkörpern verarbeiten lassen, die bei niedriger Dichte eine hohe Stauchhärte, eine hoheRückprallelastizität und einen niedrigen Druckverformungsrest aufweisen.

Demgemäß wurden Hohlpartikel mit einer Hülle aus thermoplastischen Elastomeren und einer gasgefüllten Zelle verwendet, um daraus poröse Formkörper herzustellen.

Hohlpartikel, welche für die Herstellung poröser Formkörper verwendet werden:
Die Schüttdichte der eingesetzten Hohlpartikel liegt bevorzugt im Bereich von 30 bis 500 kg/m³, besonders bevorzugt im Bereich von 50 bis 350 kg/m³.

Die Hohlpartikel weisen bevorzugt mittlere Korngrößen dₘ im Bereich von 2,5 bis 25 mm, besonders bevorzugt im Bereich von 5 bis 15 mm auf. Die Korngrößen können durch Siebanalyse bestimmt werden. Die Hohlpartikel können in monomodaler, bimodaler oder multimodaler Verteilung eingesetzt werden. Bei der Herstellung der Hohlpartikel können Teilchen mit unterschiedlichen Größen und Formen anfallen. Der mittlere Partikeldurchmesser variiert in der Regel von 2,5 mm bis zu 25 mm, bevorzugt im Bereich von 3 bis 20 mm, besonders bevorzugt im Bereich von 5 bis 15 mm auf. Der mittlere Partikeldurchmesser kann z. B durch Ausmessen von 100 Partikeln und Bildung des Mittelwertes oder durch Siebanalyse bestimmt werden. Die Teilchen können nach Größe aufgeteilt werden durch Sieben mit unterschiedlichen Sieben. So können die Teilchen in so genannte Siebfraktionen separiert werden.

Die Korngröße der Hohlpartikel hat einen erheblichen Einfluss auf die mechanischen Eigenschaften des porösen Formkörpers, aber auch auf die Menge an benötigtem Bindemittel. Je kleiner die Hohlpartikel und je größer das Verhältnis Wandstärke zu Durchmesser sind, desto höhere Druckfestigkeiten, E-Moduli, Wärmeleitfähigkeiten und Dichten können erreicht werden. Zudem wird aufgrund der höheren Oberfläche eine größere Menge an Bindemitteln benötigt.

Die Hülle der Hohlpartikel weist bevorzugt eine Wandstärke im Bereich von 0,02 bis 2 mm, besonders bevorzugt im Bereich von 0,05 bis 1 mm auf.

Die Hohlpartikel weisen jeweils eine gasgefüllte Zelle auf. Das Volumen dieser Zellen liegt bevorzugt im Bereich von 1 bis 10.000 mm , besonders bevorzugt im Bereich von 10 bis 5.000 mm³ und ganz besonders bevorzugt im Bereich von 100 bis 1.000 mm³.

Als thermoplastische Elastomere eignen sich beispielsweise thermoplastische Polyurethane (TPU), thermoplastische Polyesterelastomere (bspw. Polyetherester und Polyesterester), thermoplastische Blockcopolyamide (bspw. Polyetherblockamide PEBA aus PA-12-Segmenten und Polyether-Segmenten) oder thermoplastische Styrol-Butadien-Blockcopolymere. Besonders bevorzugt werden Hohlpartikel auf Basis von thermoplastischem Polyurethan(TPU).

Die zur Herstellung der Hohlpartikel eingesetzten thermoplastischen Elastomeren weisen bevorzugt eine Shore-Härte im Bereich von 25A bis 82D, bevorzugt im Bereich von 30A bis 80D, besonders bevorzugt im Bereich von 65A bis 96A, bestimmt nach DIN 53505, auf.

Bevorzugt werden zur Herstellung der Hohlpartikel thermoplastische Polyurethane (TPU) eingesetzt.

Bevorzugt basieren die eingesetzten TPU's auf Polyetheralkohol, besonders bevorzugt Polyetherdiol. Dabei kommt besonders bevorzugt Polytetrahydrofuran in Betracht. Besonders bevorzugt basiert das TPU auf Polytetrahydrofuran mit einem Molekulargewicht zwischen 600 g/mol und 2500 g/mol. Die Polyetheralkohole können sowohl einzeln als auch in Mischung untereinander zur Anwendung kommen.

Alternativ konnten gute Ergebnisse erzielt werden mit TPU, das auf Polyesteralkohol, bevorzugt Polyesterdiol, bevorzugt auf der Basis von Adipinsäure und Butan-1,4-diol, mit einem Molekulargewicht zwischen 600 g/mol und 3000 g/mol basiert.

Thermoplastische Polyurethane und Verfahren zu deren Herstellung sind allgemein bekannt. Beispielsweise können TPU durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemisch weitere Stabilisatoren, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide. In einer weiteren Ausführungsform kann das TPU eine Phosphorverbindung enthalten. In einer bevorzugten Ausführungsform werden als Phosphorverbindungen Organophosphorverbindungen des trivalenten Phosphors, wie beispielsweise Phosphite und Phosphonite, verwendet. Beispiele für geeignete Phosphorverbindungen sind, Triphenyl phosphit, Diphenylalkylphosphit, Phenyldialkylphosphit, Tris-(nonylphenyl) phosphit, Trilaurylphosphit, Trioctadecylphosphit, Di-stearyl-pentaerythritol diphosphit, Tris-(2,4-di-tert-butylphenyl) phosphit, Di-isodecylpentaerythritol diphosphit, Di-(2,4-di-tert-butylphenyl)pentaerythritol diphosphit, Tristearyl-sorbitol triphosphit, Tetrakis-(2,4-di-tert-butylphenyl) 4,4'-diphenylylenediphosphonit, Trisisodecylphosphit, Diisodecylphenylphosphit und Diphenylisodecylphosphit oder Gemische daraus.
   Die Phosphorverbindungen sind insbesondere dann geeignet, wenn sie schwer zu hydrolysieren sind, da die Hydrolyse einer Phosphorverbindung zur korrespondierenden Säure zu einer Schädigung des Polyurethans, insbesondere des Polyesterurethans führen kann. Dementsprechend sind insbesondere für Polyesterurethane die Phosphorverbindungen geeignet, die besonders schwer hydrolysieren. Beispiele für solche Phosphorverbindungen sind Di-polypropylenglykolphenylphosphit, Tri-isodecylphosphit, Triphenylmonodecylphosphit, Trisisononylphosphit, Tris-(2,4-di-tert-butylphenyl) phosphit, Tetrakis-(2,4-di-tert-butylphenyl) 4,4'-diphenylylenediphosphonit und Di-(2,4-di-tert-butylphenyl)-pentaerythritol diphosphit oder Gemische davon.
   Als Füllstoffe kommen organische und anorganische Pulver oder Faserstoffe, sowie Mischungen davon in Betracht. Als organische Füllstoffe können z.B. Holzmehl, Stärke, Flachs-, Hanf-, Ramie-, Jute-, Sisal- Baumwoll- Cellulose oder Aramidfasern eingesetzt werden. Als anorganische Füllstoffe können z.B. Silikate, Schwerspat, Glaskugeln, Zeolithe, Metalle oder Metalloxide eingesetzt werden. Bevorzugt werden pulverförmige anorganische Stoffe, wie Talk, Kreide, Kaolin (Al₂(Si₂O₅)(OH)₄), Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit oder kugel- oder faserförmige, anorganische Stoffe, wie Eisenpulver, Glaskugeln, Glasfasern oder Kohlefasern. Die mittleren Teilchendurchmesser bzw. bei faserförmigen Füllstoffen die Länge sollte im Bereich der Zellgröße oder kleiner liegen. Bevorzugt wird ein mittlerer Teilchendurchmesser im Bereich von 0,1 bis 100 µm, bevorzugt im Bereich von 1 bis 50 µm. Des Weiteren können als organische Füllstoffe auch Polymere in der Form von nicht schmelzenden Partikeln oder schmelzbaren Polymerkomponenten verwendet werden, die mit dem Basispolymer ein Blend bilden. Bevorzugte schmelzbare Polymere sind zum Beispiel Polyethylen, Polypropylen, Polystyrol, SAN und EVA, bevorzugte nicht schmelzende Polymere sind teil- oder ganz vernetzte Polymere wie Gummi. Bevorzugt sind thermoplastische Polyurethane, die zwischen 5 bis 80 Gew.-% organische und/oder anorganische Füllstoffe enthalten, bezogen auf das Gesamtgewicht des thermoplastischen Polyurethans.

Neben den genannten Komponenten a) und b) und gegebenenfalls c), d) und e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Die Molekulargewichtsangaben beziehen sich auf das Zahlenmittel Mₙ, in g/mol, falls nicht anders angegeben.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert. Gegebenenfalls kann es zweckmäßig sein, das erhaltene TPU vor der Weiterverarbeitung bei 80 bis 120°C, vorzugsweise 100 bis 110°C über einen Zeitraum von 1 bis 24 Stunden zu tempern.

Die Zellen der Hohlpartikel enthalten als Gas bevorzugt Sauerstoff, Stickstoff, Argon, Kohlendioxid oder Mischungen davon.

Als Partikelform kommen Tetraeder, Zylinder, Kugeln, Linsen oder Vielflächenkörper wie Würfel oder Oktaeder in Frage. Die Hohlpartikel liegen bevorzugt in Form von Hohlzylindern oder Hohltetraedern vor, die durch Verschweißung eines Schlauches oder einer Folie aus dem thermoplastischen Elastomeren hergestellt werden können. Die Hohlpartikel verhalten sich als Schüttung ähnlich wie Schaumstoffpartikel. Im Gegensatz zu diesen besitzen sie allerdings deutlich weniger und dafür größere Zellen. In der bevorzugten Ausführung mit nur einer Zelle pro Hohlpartikel entsprechen sie in ihrem Aufbau einem kleinen, luftgefüllten Tennisball. Es handelt sich quasi um ein dickwandiges, komplett hohles Partikel, das durch Schweißschneiden aus einem Schlauch oder einer Folie aus thermoplastischen Elastomeren, ähnlich einer Blisterfolie aus Polyethylen mit abgetrennten Luftkammern und anschließendem Ausstanzen der Hohlpartikel hergestellt werden kann.

Als weitere großtechnische Herstellmethode kommt auch das Extrudieren einer Schmelze durch eine Ringdüse mit kontinuierlichem Abschlag der gasgefüllten Hohlkörper in Frage. Hohlkörper aus Folien lassen sich einerseits durch Tiefziehen einer Folie und anschließendes Kontaktschweißen mit einer Deckfolie herstellen, andererseits ist auch eine kontinuierliche Herstellung aus zwei Folien mittels einer Prägewalze möglich. Dabei können auch mehrschichtige Folien oder Schläuche zur Anwendung kommen, die zum Beispiel außen eine niedrigschmelzende Schicht besitzen und innen einen höher schmelzenden Kern haben. Mehrschichtfolien oder Schläuche lassen sich mittels eines Mehrkomponentenextruders direkt bei der Extrusion herstellen oder durch ein nachträgliches Beschichten mittels eines anderen Polymeren, eines Schmelzklebers oder eines niedriger schmelzenden Polyurethanes.

### Poröser Formkörper:

Gegenstand der Erfindung ist die Verwendung der oben beschriebenen Hohlpartikel zur Herstellung von porösen Formkörpern und ein Verfahren zur Herstellung von porösen Formkörpern durch thermisches Verbinden oder Verkleben dieser Hohlpartikel. Das thermische Verbinden kann durch Verschweißen mit Wasserdampf oder Heißluft oder hochenergetische Wellen, insbesondere Mikrowellen nach vorherigem Auftragen von entsprechenden Absorbern, beispielsweise polare Flüssigkeiten wie Glycerintriacetat, erfolgen.

Besitzen die Hohlpartikel eine vergleichbare Größe wie kommerzielle Partikelschäume (ca. 2 - 15 mm Durchmesser) kann die Verarbeitung mit Maschinen analog der Formteilherstellung von Partikelschaumstoffen erfolgen. Sind die Hohlkörper größer wird eine Verarbeitung durch Verklebung oder Einschäumung bevorzugt. Eine händische Verarbeitung mittels Kaltschweißen ist ebenfalls möglich.

Die nach diesem Verfahren erhältlichen, porösen Formkörper weisen bevorzugt eine Dichte im Bereich von 50 bis 500 kg/m³, besonders bevorzugt im Bereich von 100 bis 300 kg/m³ auf.

Als Bindemittel eignen sich polymere Bindemittel, wie Melamin-Formaldehyd-Harze, Polyurethan-Harze, Polyesterharze oder Epoxidharze.Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden. Beispiele auf Basis von Melamin- und Phenolharz sowie Acrylamid sind in EP 0451535B1 und DE 19649796A1 beschrieben.

Die Bindemittel können in Form von Lösungen oder Dispersionen eingesetzt werden. Bevorzugt werden Bindemittel eingesetzt, die mit den Hohlpartikeln kompatibel sind und vergleichbare mechanische Eigenschaften aufweisen. Besonders bevorzugt weist das Bindemittel eine Bruchdehnung von mindestens 50% und eine Zugfestigkeit von mindestens 5 MPa auf.

Der Anteil an Hohlpartikeln liegt bevorzugt im Bereich von 60 bis 90 Gew.-%, bezogen auf den porösen Formkörper. Bevorzugt besteht der poröse Formkörper im Wesentlichen aus Hohlpartikeln und einer Matrix aus Polyurethan, so dass sich ein Anteil von bevorzugt 10 bis 40 Gew.-% an eingesetztem Polyurethankleber bzw. gebildeter Polyurethanmatrix, bezogen auf porösen Formkörper, ergibt.

Beim Verkleben der Hohlpartikel mit einem Polyurethankleber als Bindemittel entstehen porösen Formkörper, in denen die Hohlpartikel in eine aus einem Polyurethankleber gebildeten Matrix eingebettet sind. Es ist auch möglich durch Verkleben mit einer schäumfähigen Polyurethanmischung poröse Formkörper zu erhalten, in denen die Hohlpartikel in eine Matrix aus einem Polyurethanschaumstoff eingebettet sind. Die Matrix aus Polyurethan oder Polyurethanschaumstoff ist vorzugsweise aus mindestens einem aromatischen Diisocyanat und mindestens einem Polyol gebildet.

Wenn die Polymermatrix aus einem Polyurethanschaumstoff besteht, kann man im Prinzip von einem ,Schaum-in-Schaum' - Formkörper sprechen, der aus einer dichten Schüttung an Hohlpartikeln besteht, wobei die Zwischenräume gefüllt sind mit Schaum. Besonders bevorzugt besteht die Matrix aus einem Polyurethanschaumstoff, wenn eine besonders geringe Wärmeleitfähigkeit erreicht werden soll.

Die Polyurethanschaum-Matrix ist bevorzugt geschlossenzellig, d.h. sie weisen eine Geschlossenzelligkeit von mindestens 90%, bevorzugt mindestens 95% auf.

### Polyurethankleber als Bindemittel zur Herstellung der Matrix der porösen Formkörper

Die erfindungsgemäßen porösen Formkörper enthalten als Matrix bevorzugt geschäumte oder ungeschäumte Polyurethane, die durch Umsetzung von Isocyanaten mit Isocyanat-reaktiven Verbindungen, gegebenenfalls in Gegenwart von Treibmitteln erhalten werden können. Die Mischung der Komponenten zur Herstellung der Polyurethan-Matrix wird im Folgenden auch als Polyurethan-Reaktivmischung bezeichnet. Bevorzugt werden Komponenten eingesetzt, die dem Fachmann zur Herstellung von Polyurethanelastomeren bekannt sind.

Als Komponenten für das Polyurethanbindemittel kommen die oben für die Herstellung der thermoplastischen Polyurethane beschriebene Isocyanate (a), gegenüber Isocyanaten reaktive Verbindungen (b), Kettenverlängerungsmittel (c), Katalysatoren (d) und Zusatzstoffe (e) in Betracht.

Bevorzugte Isocyanate für das Bindemittel sind Diphenylmethandiisocyanate (MDI), insbesondere 4,4'-MDI, 2,4'-MDI, polymere MDI, TDI, HDI, trimerisiertes HDI, IPDI, H12MDI und Mischungen davon. Als polymere MDI (PMDI) werden insbesondere solche mit einer Viskosität von 10 - 10.000 mPas, insbesondere von 20 - 5.000 mPas, gemessen bei 25 °C gemäß DIN53018 eingesetzt. Ganz besonders bevorzugte Typen haben eine Viskosität zwischen 50 und 1.000 mPas.

Als Isocyanat-reaktive Verbindungen werden bevorzugt 2 - 3-funktionelle Polyole wie Polypropylenglykole (Lupranol® 1000, Lupranol® 1100 und Lupranol® 1200) mit mittleren Molekulargewichten Mw im Bereich von 200 - 5000 g/mol, Polytetrahydrofuran, aliphatische Polyesterpolyole mit mittleren Molekulargwichten Mw im Bereich von 500 - 3000, Weichschaumpolyole oder Rizinusöl eingesetzt.
Als Kettenverlängere werden bevorzugt Butandiol, Ethylenglykol, dieethylenglykol, Triethylenglykol, Propylenglykol oder Dipropylenglykol eingesetzt.

Als Vernetzer werden bevorzugt TMP, Glycerin oder kurzkettige Amine eingesetzt.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

### Treibmittel:

Die Herstellung der Polyurethan-Schaumstoffmatrix erfolgt üblicherweise in Anwesenheit von Treibmitteln. Als Treibmittel kann vorzugsweise Wasser verwendet werden, das mit Isocyanatgruppen unter Abspaltung von Kohlendioxid reagiert. Ein weiteres häufig eingesetztes chemisches Treibmittel ist Ameisensäure, die mit Isocyanat unter Freisetzung von Kohlenmonoxid und Kohlendioxid reagiert. In Kombination mit oder an Stelle der chemischen Treibmittel können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, Alkane, insbesondere niedrigsiedende Alkane und Fluoralkane, vorzugsweise, Alkane, insbesondere niedrigsiedende Alkane und Fluoralkane.
Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1 ,3,3-Pentafluorbutan, 1,1,1 ,3,3-Pentafluorpropan, 1,1,1 ,2,3-Pentafluor-propen, 1-Chlor-3,3,3-trifluorpropen, 1,1,1,2-Tetrafluorethan, Difluorethan und 1,1,1 ,2,3,3,3-Heptafluorpropan, sowie Perfluoralkane, wie C3F8, C4F1 0, C5F12, C6F14, und C7F16. Besonders bevorzugt sind Pentane, insbesondere Cyclopentan. Die genannten physikalischen Treibmittel können allein oder in beliebigen Kombinationen untereinander eingesetzt werden.

In einer bevorzugten Ausführungsform der Erfindung kann eine Mischung aus physikalischen und chemischen Treibmitteln eingesetzt werden. Besonders bevorzugt sind Mischungen aus physikalischen Treibmitteln und Wasser, insbesondere von Kohlenwasserstoffen und Wasser. Unter den Kohlenwasserstoffen sind die Pentane, und hier insbesondere das Cyclopentan, besonders bevorzugt.

### Herstellung der Polyurethan-Bindemittel

Zur Herstellung der Schaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt. Die Polyurethanschaumstoffe können diskontinuierlich oder kontinuierlich mit Hilfe bekannter Mischvorrichtungen hergestellt werden.

Bei der Herstellung von Polyisocyanuratschaumstoffen kann auch mit einem Index von > 180, vorzugsweise 300 - 400, gearbeitet werden.

Die Vermischung der Ausgangskomponenten kann mit Hilfe bekannter Mischvorrichtungen erfolgen.

Üblicherweise werden die Polyurethanschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen, den Treibmitteln, den Katalysatoren sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.
Die Ausgangskomponenten werden zumeist bei einer Temperatur von 15 bis 50 °C, vorzugsweise von 20 bis 30 °C gemischt. Das Reaktionsgemisch kann mit Hoch- oder Niederdruckdosiermaschinen vermischt werden.

Die Dichte der hier erhaltenen Hartschaumstoffmatrix, die so genannte Freischaumdichte des Schaumstoffs, beträgt vorzugsweise 30 bis 500 kg/m³.

### Herstellung der porösen Formteile

Zur Herstellung der erfindungsgemäßen porösen Formteile können die Hohlpartikel beispielsweise in einer solchen Weise vorgelegt werden, dass sie anschließend nicht bzw. nicht wesentlich durch die geschäumte oder ungeschäumte Polyurethan-Reaktivharzmischung auseinander gedrückt werden können. Hierfür eignet sich beispielsweise eine randvoll mit einer dicht gepackten Schüttung gefüllte, fest verschließbare Form oder ein Doppelbandlaminator, bei dem die Höhe der Schüttung mit der Verarbeitungshöhe des Laminators übereinstimmt.

Die Zugabe der geschäumten oder ungeschäumten Polyurethan-Reaktivharzmischung erfolgt in einer solchen Weise, dass ein Gewichtsanteil von 20 Gew.-%, bevorzugt 15 Gew.-% an Bindemittel des porösen Formteiles nicht überschritten wird, aber sämtliche Hohlgranulate fest miteinander verklebt werden.

Im Falle einer kompakten Matrix aus ungeschäumtem Polyurethan werden die Hohlpartikel mit dem Polyurethan-Reaktivgemisch verrührt und in die entsprechende Form gebracht und ausgehärtet.

Bei einer Matrix aus geschäumtem Polyurethan wird das treibmittelhaltige Polyurethan-Reaktivgemisch gleichmäßig über die vorliegende Schüttung der Hohlpartikel gegeben und ausreagieren gelassen, ohne dass die einzelnen Hohlpartikel nennenswert durch den Schäumprozess auseinandergedrückt werden können.

Schäumfähige Polyurethan-Reaktivmischungen sollten sich durch eine hohe Fließfähigkeit und eine relativ lange Reaktionszeit auszeichnen, damit die Hohlräume zwischen den einzelnen Hohlpartikel durch die fließfähige Polyurethan-Reaktivmischung benetzt und beim Aufschäumen ausgefüllt werden können. Ausreichend lange Reaktionszeiten können durch Art und Menge der eingesetzten Katalysatoren eingestellt werden. Um eine hinreichend hohe Aushärtung des Reaktionsgemisches auch bei niedrigen Katalysatormengen oder ganz ohne Katalysator zu erreichen, kann die Form in der die Reaktion abläuft auf entsprechend hohe Temperaturen geheizt werden.

Wenn das eingesetzte Schaumsystem in einer offenen Form aufgeschäumt wird, sollte es eine Fadenziehzeit von mindestens 60 Sekunden, bevorzugt mindestens 90 Sekunden und besonders bevorzugt von mindestens 120 Sekunden aufweisen. Um die fehlende Temperatur durch eine beheizte Form zu kompensieren kann man beispielsweise ein Polyurethan-übliches Gemisch aus Aminkatalysatoren einsetzen, um vergleichbare Reaktionszeiten zu erzielen.

Die Hohlpartikel können vor der Verklebung mit verschiedenen Zusatzstoffen beschichtet werden, wie z.B. Flammschutzmitteln, Katalysatoren.

Ein besonders bevorzugtes Verfahren zur Herstellung des erfindungsgemäßen porösen Formteiles umfasst die Stufen
a) Einbringen von Hohlpartikel in eine beheiz- und verschließbare, Entlüftungsöffnungen aufweisende Form,
b) Benetzen der Hohlpartikel mit einer gegebenenfalls Treibmittel-haltigen Polyurethan-Reaktivharzmischung,
c) Schließen der Form, wobei die geschlossene Form ein Volumen aufweist, das durch die dichteste Packung der Hohlpartikel vorgegeben ist, und
d) Aushärten und Entformen.

### Thermisches Verbinden

Aus den erfindungsgemäß verwendeten Hohlpartikeln kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel etwas expandieren und miteinander zum Schaumstoff, vorzugsweise mit einer Dichte im Bereich von 30 bis 600 g/l, verschweißen. Die Schaumstoffe können Halbzeuge sein, beispielsweise Platten, Profile oder Bahnen, oder fertige Formteile mit einfacher oder komplizierter Geometrie. Demnach schließt der Begriff TPU-Schaumstoff, Schaumstoffhalbzeuge und Schaumstoff-Formteile ein.

Die Temperatur bei dem Verschweißen der TPU-Hohlpartikel liegt bevorzugt zwischen 100°C und 160°C. Gegenstand der vorliegenden Erfindung sind somit auch Verfahren zur Herstellung von Schaumstoff auf der Basis von thermoplastischem Polyurethan, wobei man das erfindungsgemäße expandierte thermoplastische Polyurethan mittels Wasserdampf mit einer Temperatur zwischen 100°C und 160°C zu einem Formkörper verschweißt.

Gegenstand der Erfindung ist ferner auch die Verwendung der Hohlpartikel zur Herstellung von TPU-Schaumstoffen, sowie TPU-Schaumstoffe, erhältlich aus den Hohlpartikeln.

Die erfindungsgemäßen Schaumstoffe können problemlos thermoplastisch recycelt werden. Dazu werden die Hohlpartikel unter Verwendung eines Extruders mit einer Entgasungsvorrichtung extrudiert, wobei der Extrusion gegebenenfalls eine mechanische Zerkleinerung vorangehen kann. Danach können sie in der oben beschriebenen Weise wieder zu Hohlpartikel bzw. Schaumstoffen verarbeitet werden.

### Verarbeitung

Der erfindungsgemäße poröse Formkörper kann auf mindestens einer Seite mit mindestens einer Deckschicht kaschiert sein, um die Eigenschaften der Oberfläche zu verbessern, so z. B. die Robustheit zu erhöhen, sie als Dampfsperre auszubilden oder gegen leichte Verschmutzung zu schützen. Die Deckschichten können auch die mechanische Stabilität des porösen Formkörpers verbessern. Werden auf beiden Flächen Deckschichten verwendet, so können diese gleich oder verschieden sein.

Als Deckschichten eignen sich alle dem Fachmann bekannten Materialien. Sie können nicht-porös sein und damit als Dampfsperre wirken, wie z. B. Kunststofffolien, vorzugsweise metallisierte Kunststofffolien, die Wärmestrahlung reflektieren. Es können aber auch poröse Deckschichten verwendet werden, die ein Eindringen von Luft in das Material ermöglichen, wie z. B. poröse Folien, Papiere, Gewebe oder Vliese.

Die Oberfläche des Verbundmaterials kann auch mit einem Material beschichtet werden, um die Haptik des Verbundmaterials zu verändern.

Des Weiteren kann eine aufgebrachte Schicht die Haftung zu anderen Substraten verbessern. Die Feuchtigkeitsaufnahme kann durch das Aufbringen einer geeigneten Schicht reduziert werden. Eine solche Schicht kann auch aus einem Reaktivsystem wie z. B. Epoxidharzen oder Polyurethanen bestehen, die ggf. durch Sprühen, Rakeln, Gießen oder Streichen o. ä. aufgebracht werden können.

Die Deckschichten können selbst auch aus mehreren Schichten bestehen. Die Deckschichten können mit der Polyurethan-Reaktivmischung, die für die Herstellung der Matrix verwendet wird, befestigt sein, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden. Als Materialien sind z. B. thermoplastische Polymere, wie z. B. Polyethylen und Polypropylen, oder Harze wie z. B. Melaminformaldehydharze geeignet.

Die erfindungsgemäß verwendeten Hohlpartikel führen bei einer Weiterverarbeitung mittels Verklebung oder Verschweißung zu porösen Formkörpern, die in ihren mechanischen Eigenschaften mit denen aus verschweißten Schaumstoffperlen aus thermoplastischem Elastomeren, wie sie beispielsweise in WO 2007/082838 beschreiben sind, vergleichbar, hierbei aber transparent und dickwandig sind. Das erfindungsgemäße Verfahren bietet die Möglichkeit, dickere Zellwände bei gleichzeitig niedrigem Bauteilgewicht zu erreichen.

### Verwendung

Die erfindungsgemäßen porösen Formkörper können für verschiedenste Anwendungen eingesetzt werden. Aufgrund der elastomeren Eigenschaften ist er für Anwendungen im Sport-, Schuh- und Verpackungsbereich, beispielsweise für als Sohlen für Sport- oder Sicherheitsschuhe oder als Verpackung von elektronischen Bauteilen oder Geräten geeignet. Bevorzugt werden die porösen Formkörper als Dämpfungselemente in Schuhen, Sportgeräten, Automobilen oder Maschinen eingesetzt.

### Beispiele

In den Beispielen und Vergleichsversuchen wurden folgende, in Tabelle 1 genannten, Komponenten eingesetzt:

**Tabelle 1**

| Kurzbezeichnung | Zusammensetzung |
|---|---|
| E-TPU1 | (Infinergy® 32-100 U10) expandierte, überwiegend geschlossenzellige Schaumstoffpartikel auf Basis von thermoplastischem Polyurethan, erhalten durch Aufschäumen von granuliertem, treibmittelhaltigem TPU1 unter Druck und hoher Temperatur, Schüttdichten 110 g/l. |
| E-TPU2 | (Infinergy® 32-150 U10) expandierte, überwiegend geschlossenzellige Schaumstoffpartikel auf Basis von thermoplastischem Polyurethan, erhalten durch Aufschäumen von granuliertem, treibmittelhaltigem TPU1 unter Druck und hoher Temperatur, Schüttdichten 150 g/l. |
| TPU1 | Thermoplastisches Polyether Polyurethan mit einer Shorehärte von 80A auf der Basis von PTHF1000, 1,4 Butandiol, 4,4' MDI |
| TPU2 | Thermoplastisches Polyether Polyurethan mit einer Shorehärte von 85A auf der Basis von PTHF1000, 1,4 Butandiol, 4,4' MDI |
| K1 | Elastopave 6550/101 der BASF Polyurethanes GmbH, kompaktes, 2-Komponenten Polyurethan-Klebersystem. |
| HP1 | Tetraeder aus TPU1 mit Kantenlänge 12 mm und einer Schüttdichte von 160 g/l |
| HP2 | Zylinder aus TPU1 mit Länge 15 mm, einem Durchmesser von 5,4 mm und einer Schüttdichte von 320 g/l |
| HP3 | Tetraeder aus TPU2 mit Kantenlänge 12 mm und einer Schüttdichte von 150 g/l |

### Geräte:

Labor-Extruder der Marke Brabender zur Herstellung der TPU Schläuche Heißdraht Laborschweißgeräte zum Abschweißen der TPU Formkörper aus den TPU Schläuche und Folien

### Messmethoden:

Zur Bestimmung der Schüttdichte wurde ein 200 ml Gefäß mit Partikeln gefüllt und das Gewicht mittels einer Waage bestimmt. Dabei kann von einer Genauigkeit von ± 5 g/l ausgegangen werden.

Die Raumgewichte der porösen Formkörper wurde nach DIN EN ISO 1183-1, A ermittelt.

Die Stauchhärte der porösen Formkörper wurde in Anlehnung an DIN EN ISO 3386 bei 10%, 25%, 50% und 75% Stauchung gemessen.

Die Druckverformung der porösen Formkörper wurde nach Konditionierung (6h/50°C/50%) nach ASTM D395 gemessen.

Die Rückprallelastizität der porösen Formkörper wurde nach DIN 53512 bestimmt.

Bruchdehnung und Zugfestigkeit wurden nach DIN 53504 bestimmt.

### Herstellung der TPU Hohlpartikel HP1 bis HP3

Aufbau des Brabender Einwellen-Laborextruders mit Schlauchdüse, Abzugsband und Wasserbad.
Extrudertyp: Brabender - Extrusiograph E 19/25 D (19 mm Schneckendurchmesser) Dreizonenschnecke, ohne Siebe
Schneckendrehzahl = 25 U/min

### Temperaturprofil für TPU1 und TPU2:

Zone 1: 180°C, Zone 2: 190°C, Zone 3: 200°C, Zone 4: 190°C, Schlauchkopf: 190°C (TPU1) oder 200°C (TPU2)

Trocknung des TPU Granulates für 3h bei 110°C im Umluftofen.

Auf dem Laborextruder wurden aus den TPU1 und TPU2 transparente Schläuche mit einem Außendurchmesser von 5,4 mm und einer Wandstärke von 1,0 mm, sowie transparente Schläuche mit einem Außendurchmesser von 5,0 mm und einer Wandstärke von 0,2 mm hergestellt.

Die erhaltenen dünnwandigen Schläuche wurden mittels eines Laborschweißgerätes der Marke Qigg zu Tetraedern mit einer Kantenlänge von 12 mm, die dickwandigen Schläuche mit einer Folienschweißzange der Firma Kapp zu Zylindern mit einer mittleren Länge von 15 mm verarbeitet.

### Herstellung der porösen Formkörper

Jeweils 100 Gewichtsteile der Hohlpartikel HP1 bis HP3 bzw. die Vergleichsprodukte E-TPU1 und E-TPU2 wurden entsprechend den Angaben in Tabelle 1 mit zusätzlich 20 bzw. 30 Gewichtsteilen des 2-Komponenten PU-Klebstoffs K1 vermischt und zu würfelförmigen, porösen Formkörpern mit einer Kantenlänge von 44 mm verarbeitet. Hierzu wurden die Hohlpartikel HP1 bis HP3 bzw. die Vergleichsprodukte E-TPU1 und E-TPU 2 in einen PE-Behälter gegeben, die entsprechend Menge der Komponenten 1 und 2 des Klebstoff1 eingewogen, intensiv vermischt, auf die Hohlpartikel gegeben, mit diesen intensiv vermischt und die Mischung in eine aufklappbare Form mit einer inneren Kantenlänge von 44 mm gegeben.
Nach dem Aushärten des Klebstoffes wurde der Formkörper der Form entnommen und die Dichte mittels der oben beschriebenen Methode bestimmt.

**Tabelle 1. Messergebnisse an porösen Formkörpern aus verklebten Hohlpartikeln der Beispiele 1 bis 3 und Vergleichsversuche 1 und 2**

| | V1 | V2 | B1 | B2 | B3 |
|---|---|---|---|---|---|
| Partikel | E-TPU1 | E-TPU2 | HP1 | HP2 | HP3 |
| Zusatz PU-Kleber K1 [Gewichtsteile] | 30 | 20 | 20 | 20 | 20 |
| Schüttdichte der Hohlpartikel bei 23°C [kg/m³] | 80 | 150 | 160 | 320 | 150 |
| Stauchhärte 10% [kPa] | 29,8 | 56,8 | 69,7 | 156,7 | 60,8 |
| Stauchhärte 25%[kPa] | 57,7 | 110,1 | 128,5 | 381 | 109,4 |
| Stauchhärte 50%[kPa] | 135,6 | 254,7 | 286,2 | 1043,4 | 246,3 |
| Stauchhärte 75%[kPa] | 485,8 | 1051,2 | 1574,9 | 9299 | 1381,2 |
| Raumgewicht des Formkörpers[kg/m³] | 130,9 | 192,4 | 265,6 | 467,2 | 232,6 |
| Druckverformungsrest [%] | 50 | 32,1 | 19,6 | 25,8 | 19,1 |
| Rückprallelastizität [%] | 65 | 67 | 59 | 56 | 64 |

Die Formkörper der erfindungsgemäßen Beispiele B1 bis B3 zeigen gegenüber den Vergleichsversuchen V1 und V2 eine signifikant höhere Stauchhärte und geringeren aus thermoplastischen Elastomeren und poröse Formkörper

## Patentansprüche

1. Verwendung von Hohlpartikeln mit einer Hülle aus thermoplastischen Elastomeren und einer gasgefüllten Zelle zur Herstellung von porösen Formkörpern.

2. Verwendung nach Anspruch 1, **dadurch gekennzeichnet, dass** die Hohlpartikel eine Schüttdichte im Bereich von 30 bis 500 kg/m³ aufweisen.

3. Verwendung nach Anspruch 1 oder 2, **dadurch gekennzeichnet, dass** die Hohlpartikel einen mittleren Partikeldurchmesser im Bereich von 2,5 bis 25 mm aufweisen.

4. Verwendung nach einem der Ansprüche 1 bis 3, **dadurch gekennzeichnet, dass** die Hülle der Hohlpartikel eine Wandstärke im Bereich von 0,02 bis 2 mm aufweist.

5. Verwendung nach einem der Ansprüche 1 bis 4, **dadurch gekennzeichnet, dass** die gasgefüllte Zelle der Hohlpartikel ein Volumen im Bereich von 1 bis 10.000 mm³ aufweist.

6. Verwendung nach einem der Ansprüche 1 bis 5, **dadurch gekennzeichnet, dass** das thermoplastische Elastomer der Hohlpartikel ausgewählt ist aus thermoplastischen Polyurethanen (TPU), thermoplastischen Polyestern (TPE), thermoplastischen Polyetherblockamiden (PEBA) oder thermoplastischen Styrol-Butadien-Blockcopolymeren (TPS).

7. Verwendung nach einem der Ansprüche 1 bis 6, **dadurch gekennzeichnet, dass** die gasgefüllte Zelle der Hohlpartikel Sauerstoff, Stickstoff, Argon, Kohlendioxid oder Mischungen davon enthält.

8. Verfahren zur Herstellung von porösen Formkörpern durch thermisches Verbinden oder Verkleben von Hohlpartikeln gemäß einem der Ansprüche 1 bis 7.

9. Verfahren zur Herstellung von porösen Formkörpern nach Anspruch 8, **dadurch gekennzeichnet, dass** die Hohlpartikel mittels heißer Luft, Dampf, elektrischer Energie oder energiereicher Strahlung verschweißt werden.

10. Poröser Formkörper, erhältlich nach dem Verfahren gemäß Anspruch 8 oder 9.

11. Poröser Formkörper nach Anspruch 10, **dadurch gekennzeichnet, dass** er eine Dichte im Bereich von 50 bis 500 kg/m³ aufweist.

12. Poröser Formkörper nach Anspruch 10 oder 11, **dadurch gekennzeichnet, dass** Hohlpartikel in eine aus einem Polyurethankleber gebildete Matrix eingebettet sind.

13. Poröser Formkörper nach Anspruch 10 oder 11, **dadurch gekennzeichnet, dass** die Hohlpartikel in eine Matrix aus einem Polyurethanschaumstoff eingebettet sind.

14. Verwendung der porösen Formkörper nach einem der Ansprüche 10 bis 13 als Dämpfungselemente in Schuhen, Sportgeräten, Automobilen oder Maschinen.

## Claims

1. The use of hollow particles having a shell made of thermoplastic elastomers and a gas-filled cell for producing porous shaped articles.

2. The use according to Claim 1, wherein the hollow particles have a poured density in the range from 30 to 500 kg/m³.

3. The use according to Claim 1 or 2, wherein the hollow particles have an average particle diameter in the range from 2.5 to 25 mm.

4. The use according to any of Claims 1 to 3, wherein the shell of the hollow particles has a wall thickness in the range from 0.02 to 2 mm.

5. The use according to any of Claims 1 to 4, wherein the gas-filled cell of the hollow particles has a volume in the range from 1 to 10 000 mm³.

6. The use according to any of Claims 1 to 5, wherein the thermoplastic elastomer of the hollow particles is selected from thermoplastic polyurethanes (TPU), thermoplastic polyesters (TPE), thermoplastic polyether block amides (PEBA) or thermoplastic styrene-butadiene block copolymers (TPS).

7. The use according to any of Claims 1 to 6, wherein the gas-filled cell of the hollow particles comprises oxygen, nitrogen, argon, carbon dioxide or mixtures thereof.

8. A process for producing porous shaped articles by thermally joining or adhesively bonding hollow particles according to any of Claims 1 to 7.

9. The process for producing porous shaped articles according to Claim 8, wherein the hollow particles are welded together using hot air, steam, electrical energy or high-energy radiation.

10. A porous shaped article obtainable by the process according to Claim 8 or 9.

11. The porous shaped article according to Claim 10, wherein said article has a density in the range from 50 to 500 kg/m³.

12. The porous shaped article according to Claim 10 or 11, wherein hollow particles are embedded in a matrix formed of a polyurethane adhesive.

13. The porous shaped article according to Claim 10 or 11, wherein the hollow particles are embedded in a matrix composed of a polyurethane foam.

14. The use of the porous shaped articles according to any of Claims 10 to 13 as damping elements in shoes, sports equipment, automobiles or machines.

## Revendications

1. Utilisation de particules creuses dotées d'une enveloppe composée d'élastomères thermoplastiques et d'une cellule remplie de gaz pour la préparation de corps moulés poreux.

2. Utilisation selon la revendication 1, **caractérisée en ce que** les particules creuses présentent une densité apparente dans la plage de 30 à 500 kg/m³.

3. Utilisation selon la revendication 1 ou 2, **caractérisée en ce que** les particules creuses présentent un diamètre moyen de particule dans la plage de 2,5 à 25 mm.

4. Utilisation selon l'une quelconque des revendications 1 à 3, **caractérisée en ce que** l'enveloppe des particules creuses présente une épaisseur de paroi dans la plage de 0,02 à 2 mm.

5. Utilisation selon l'une quelconque des revendications 1 à 4, **caractérisée en ce que** la cellule remplie de gaz des particules creuses présente un volume dans la plage de 1 à 10 000 mm³.

6. Utilisation selon l'une quelconque des revendications 1 à 5, **caractérisée en ce que** l'élastomère thermoplastique des particules creuses est choisi parmi des polyuréthanes thermoplastiques (TPU), des polyesters thermoplastiques (TPE), des polyéthers blocs amides thermoplastiques (PEBA) ou des copolymères thermoplastiques à blocs styrène-butadiène (TPS).

7. Utilisation selon l'une quelconque des revendications 1 à 6, **caractérisée en ce que** la cellule remplie de gaz des particules creuses contient de l'oxygène, de l'azote, de l'argon, du dioxyde de carbone ou des mélanges correspondants.

8. Procédé pour la préparation de corps moulés poreux par liaison ou collage thermique de particules creuses selon l'une quelconque des revendications 1 à 7.

9. Procédé pour la préparation de corps moulés poreux selon la revendication 8, **caractérisé en ce que** les particules creuses sont soudées au moyen d'air chaud, de vapeur, d'énergie électrique ou de rayonnement riche en énergie.

10. Corps moulé poreux, obtenu par le procédé selon la revendication 8 ou 9.

11. Corps moulé poreux selon la revendication 10, **caractérisé en ce qu'**il présente une densité dans la plage de 50 à 500 kg/m³.

12. Corps moulé poreux selon la revendication 10 ou 11, **caractérisé en ce que** les particules creuses sont incorporées dans une matrice formée d'un adhésif de polyuréthane.

13. Corps moulé poreux selon la revendication 10 ou 11, **caractérisé en ce que** les particules creuses sont incorporées dans une matrice d'une mousse de polyuréthane.

14. Utilisation des corps moulés poreux selon l'une quelconque des revendications 10 à 13 en tant qu'éléments d'amortissement dans des chaussures, des appareils de sport, des automobiles ou des machines.
